# EUROPEAN PATENT APPLICATION

(11) **EP 1 536 608 A1**
(43) Date of publication of application: **01.06.2005**
(21) Application number: 03360132.9
(22) Date of filing: 28.11.2003
(51) Int. Cl.: H04L 29/06

(54) **Mobile phone and method for operating a mobile phone, access point and service center**

(71) Applicant: ALCATEL, 75008 Paris (FR)
(72) Inventor: Weik, Hartmut, 70195 Stutgart (DE); Rupp, Stephan, 74354 Besigheim (DE)
(74) Representative: Kohler Schmid Möbus

(57) **Abstract**

This invention relates to a method for operating a mobile phone, a mobile phone 1 for carrying out the steps of the method, an access node 14 of the internet 10 and a service center 20. The method is comprising the steps of activating of software for converting speech and control signals into VolP data signals or vice versa by said mobile phone, setting up an IP connection between said mobile phone and a terminal, being able to process VolP data signals, via nodes of the internet, transferring speech and control signals into VolP data signals by said mobile phone and transmitting said VolP data signals from said mobile phone to an access node of said nodes and/or receiving VolP data signals from said terminal via said access node by said mobile phone and transferring said VolP data signals into speech and control signals by said mobile phone, and closing said IP connection.

## Description

This invention relates to a method for operating a mobile phone, a mobile phone for carrying out the steps of the method, an access node of the internet and a service center. The mobile phone is using Internet Protocoll (IP) connections for telecommunication. The service center comprises means for providing software for carrying out the inventive method to a mobile phone according to the invention.

According to prior art Voice on Internet Protocol (VolP) between Personal Computers (PC) and/or gateways to voice terminals are known. The voice terminals are part of a fixed network including an interface to the Internet (access point).

For the current range of VolP applications, as offered by telecommunication providers such as Net2Phone or Delta, a PC supplied with speech transferring means, e.g. a PC with headset and microphone, is needed. Furthermore, skills in using computer programs like Netmeeting or MS Messenger are necessary. Payment is usually carried out by credit card onto the VolP provider's pre-paid account, e.g. US $ 25 in advance. Thus, huge target groups for VolP applications cannot be reached, e.g. foreigners among the population, who still have to rely on phone shops in order to make cheap phone calls to their home countries.

It is known to communicate with mobile phones via cell phone nets as UMTS and/or to access the internet with a mobile phone using WAP. Therefore, it is possible that a mobile phone cannot reach a cell phone net, e.g. in buildings which are shielded against cell phone nets.

It is therefore an object of the invention to provide a method for operating a mobile phone, a mobile phone for carrying out the steps of the method, an access node of the internet and a service center which overcome the problems associated with the related art, in particular which offer the possibility to use the mobile phone without having a connection to a cell phone net.

The object concerning a method for operating a mobile phone is attained by the method according to claim 1. The object concerning the mobile phone is attained by the mobile phone defined in claim 5 and the object concerning an access node of the internet is attained by the access node of claim 8. Furthermore, the object concerning a service center is obtained by the service center defined in claim 10.

Further advantageous features of the invention are defined in the depending claims.

The inventive method for operating a mobile phone is comprising the steps of
- activating of software for converting speech and control signals into VolP data signals or vice versa by said mobile phone,
- setting up an IP connection between said mobile phone and a terminal, being able to process VolP data signals, via nodes of the internet,
- transferring speech and control signals into VolP data signals by said mobile phone and transmitting said VolP data signals from said mobile phone to an access node of said nodes and/or
- receiving VolP data signals from said terminal via said access node by said mobile phone and transferring said VolP data signals into speech and control signals by said mobile phone, and
- closing said IP connection.
   The access node is comprising means to communicate with the mobile phone via a wireless connection. The VolP signals are transmitted over said wireless connection, wherein VolP signals are signals comprising data coded according to a VolP protocol.

The inventive method results at least in the following advantages:
- The applicability of known available technologies is broadened.
- VolP applications can be used with mobile phones.
- Telephone calls using a mobile phone are cheaper (online tariff calling) by setting up telecommunication using cheap access of Internet Suppliers (ISP)
- Necessary technical configuration of the mobile phone is possible at any time later on. Known mobile phones can be configured to be able to perform the steps according to the inventive method.
- The invention offers a new feature for a mobile terminal or a softswitch.
- Telephoning via on-line-access using VolP applications in mobile phones is possible.
- Mobile phones can be used without having contact to a cell phone net, e.g. by setting up a call via Bluetooth or a Wireless Local Area Network (WLAN).

In case the call is set up to a landline network telephone it is preferred that, said terminal transfers said VolP data signals into analogue or digital telephone signals and transmits said telephone signals to a telephone. In this case the terminal is used as a gateway adopted to convert VolP data into normal telephone signals, which are transferred from the gateway to a normal speech telephone. According to this embodiment the inventive method can be used to set up calls to known landline network telephones.

Preferably, said software is downloaded by the mobile phone from a service provider, preferably in a prepaid manner, comprising the steps of
- transferring information to said service provider, including software access permission data and
- providing said software by said service provider.
After a price has been paid for the service to be used an information containing data that the price or an amount of money has been paid is transferred to the provider. This may be done by submitting a code of a prepaid card. After that the software is provided to the mobile phone, e.g. the download of the software may be done by receiving a short message from the provider, containing the code of the software. This results in an easy method of cash up and easy operation and usage of the invention.

Preferably, said downloading is comprising the step of entering service access data or that said downloaded software is asking for service access data while being activated by said mobile phone. Such service access data may be, e.g. dialling parameters as the phone number of an internet provider and/or an account of the service user. Therefore it is possible to use the mobile phone for carrying out VolP calls as they are usually carried out using a PC.

According to the invention, the inventive mobile phone for carrying out the steps of the method according to the inventive method is comprising
- software activation means, being designed to activate software for conversion of speech and control signals into VolP data signals or vice versa,
- IP connection means, being designed to set up and close an IP connection between said mobile phone and a terminal, designed to process VolP data signals, via nodes of the internet,
- data transfer means, being designed to transfer speech and control signals into VolP data signals and to transmit said VolP data signals from said mobile phone to an access node of said nodes and/or to receive VolP data signals from said terminal via said access node and to transfer said VolP data signals into speech and control signals.
The inventive mobile phone offers the possibility to achieve the advantages of the inventive method.

Preferably, the inventive mobile phone is being designed to process Java and/or Jamba code sections and/or is being designed to communicate using a Bluetooth and/or a WLAN protocol. Most recently known mobile phones are comprising means adopted to be able to use Java and/or Jamba and to communicate using a Bluetooth and/or a WLAN protocol. Therefore proven technology can be used to implement the inventive mobile phone. Especially Bluetooth can be used advantageously, because a Bluetooth interface is characterized in that it is having low power consumption, i.e. it is preferred to be used by mobile devices, as a mobile phone.

The inventive mobile phone preferably is comprising a microcomputer loaded with a computer program with software code sections by which the steps of the inventive method are carried out. To implement the inventive mobile phone in such a way is the easiest possibility to obtain the advantages of the invention.

An access node according to the invention is comprising data transmission means, being designed to transmit VolP data signals to mobile phone according to the invention and/or to receive VolP data signals from a mobile phone according to the invention. The access node is connected to the internet and is comprising means to exchange data coded according to a VolP protocol with an inventive mobile phone using a wireless connection to the mobile phone. It is part of a system to provide the ability to use the inventive method and therefore it achieves the advantages of the inventive method.

Preferably, the inventive access node is comprising a Bluetooth access point and/or a LAN, preferably a WLAN access point. Therefore the access point may be part of a known wireless network system.

The inventive service center is comprising software providing means, being designed to provide software comprising code sections for carrying out the inventive method to an inventive mobile phone. The inventive service center is able to provide software in a prepaid manner, resulting in easy operation and usage of the inventive method.

The different features of the preferred embodiments of the invention may be used in combination together with the invention as set forth in the independent claims or just each single preferred embodiment together with the invention as set forth in the independent claims.

The embodiments of the invention will now be described with reference to the accompanying drawing.

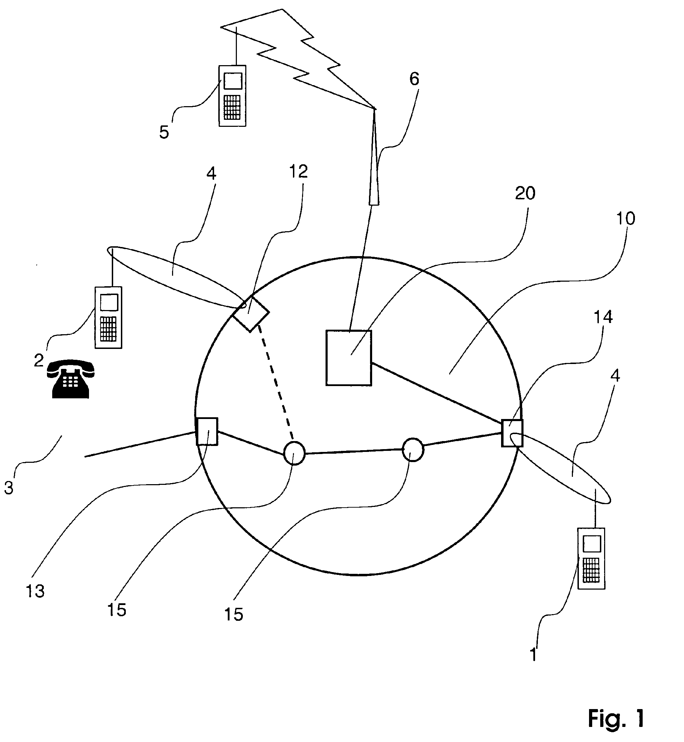

In fig. 1 the environment, wherein the inventive mobile phone and the inventive access point are operated according to the inventive method is shown.

The mobile phone may be operated in a low-cost manner according to the inventive method. Therefore starting a downloaded application triggers off access to the internet via an on-line access. This part of the connection can be carried out at the respective on-line tariff (rate). The environment enables a realisation of VolP applications via on-line-access making use of a mobile phone. The mobile phone is equipped with software having the possibility to practice VolP. The software is downloaded like software for a game from a service center (provider) 20. The software is paid and downloaded from a server of the VolP provider, or a server of a service provider, or a provider of a cell phone net. The usage method may be provided and marketed by any service provider that provides other applications, e.g. games, for downloading onto mobile phones. In the figure the mobile phone 5 is downloading the software from service center 20, via a cell phone net, comprising a cell phone network antenna 6.

The access to the internet, used as a telecommunication network is performed by means of an access point 12,14 , e.g. comprising a Bluetooth Access Point or a LAN Access Point. A software is activated for converting speech and control signals into VolP signals and vice-versa. After that, an IP connection is set up (call) with a further terminal, e.g. a second mobile phone 2 according to the invention or a normal telephone 3 via a gateway. The gateway 13 is a special kind of an access node. The second terminal is adopted to work in a VolP manner. In case of a gateway, it is adopted to convert VolP into normal telephone signals. From this gateway the IP connection is set forth to the normal telephone as a digital or analogue telephone connection. The call is carried out via the IP connection until it is ended, when the conversation of the participants of the call is finished. The IP connection between mobile phone 1 and telefone 3 shown in the figure is set up via the the public switched telephone network, PSTN 30, and the internet nodes 13,14,15, wherein nodes 14, 13 are access nodes to the internet 10. Also an optional connection to a second mobile phone 2 according to the invention is shown, by way of a dotted line reaching an access node 12. The mobile phones 1,2 are exchanging VolP signals 4 with access nodes 12,14. The gateway 13 and the access nodes 12,14 are terminals being adopted and able to process VolP signals. Further the gateway 13 is connected to the public switching network (PSTN) 30 to reach the telephone 3. The gateway 13 is also connected to a cell phone network 31, e.g. the Public Land Mobile Network (PLMN) and/or UMTS. This enables a user, using an inventive mobile phone to set up a call to a conventional mobile phone. I.e. the gateway 13 is a gateway between the internet 10 and existing public networks. The inventive method is based on downloading software (application) onto a customer's mobile phone, which is a usual method for all mobile phones being able to process Java code sequences. By 2007, according to current market forecasts, these will account for 75% of all mobile phones. Games can be downloaded onto mobile phones being able to process Java code sequences. Examples are Vodaphone's "Load-a-game" or Debitel's application on a Jamba-basis. In this case, a small amount of money, for example about one to two Euros, has to be paid in advance in one of the usual methods of payment, e.g. paybox, money transfer, credit card, telephone bill. After paying, one's mobile phone receives a short message. As the short message appears the application is being downloaded onto the mobile phone. This method, originally introduced for playing games on the mobile phone, is being used for applications of the VolP-provider. These applications can be called "talklets", for instance. The talklet is paid for, downloaded and/or started in the same way as games. After starting the talklet, it sets forth its access to the internet via dialing a Bluetooth Access Point or a WLAN Access Point. The application gets in contact with the server on base of the current rates and may ascertain the currently valid rate for said connection. It asks to put in the requested phone number and starts the connection to the required dialogue partner via the VolP provider's net. Bluetooth is already available with most mobile phones nowadays. Some providers, as AVM, already offer Bluetooth Access Points being able to communicate according to an ISDN protocol (ISDN over Bluetooth). Using the Cordless Telephone Profile, Bluetooth has the potential to replace current wireless standards like DECT. If Bluetooth is going to develop in a positive way, mobile phones will also be able to be used as wireless telephones. Dialing into on-line-access will be carried out as usual, i.e. via modem or ISDN using the service provider's access number (e.g.1914 for AOL, 019011 for T-Online etc.), or a flat rate or rather a volume rate, e.g. using DSL or rather cable modem. In each case, access to the internet is based on the internet access provider's rates. This will also enable the usage of a mobile phone under conditions, where a cell phone net is not available but a wireless access node to the internet is available. Access data, e.g. dialing parameters, can be entered by the user when ordering a talklet, or access data are searched for by the talklet in the mobile phone. Dialing can also be accomplished by WLAN. In this case, however, the mobile phone would have to be equipped with hardware, being able to communicate with the WLAN.

After access into the internet, the respective phone number is dialed. The call is transferred according to the conditions of the VolP-provider. VolP-providers usually have gateways into the local Public Switched Telephone Network (PSTN) at their disposal. The talklet can either constitute in itself a pre-paid account, similar to the usual pre-paid cards, or it can communicate in order to debit a pre-paid account there. The application may debit money from a pre-paid account at the VolP provider or may reduce the pre-paid amount for downloading the application within the application. In the latter case, the application cannot be started if the amount has already been used up or rather, the connection will be interrupted as soon as the credit amount will have been used up. For further connections a new application will have to be downloaded. Equally, the talklet communicates with the server of the VolP-provider in order to search for current rates for the requested connection. Further options include displaying rates etc.

## Claims

1. Method for operating a mobile phone (1), comprising the steps of
- activating of software for converting speech and control signals into VolP data signals or vice versa by said mobile phone,
- setting up an IP connection between said mobile phone (1) and a terminal (2, 13), being able to process VolP data signals, via nodes (13, 14, 15) of the internet (10),
- transferring speech and control signals into VolP data signals by said mobile phone and transmitting (4) said VolP data signals from said mobile phone (1) to an access node (14) of said nodes and/or
- receiving VolP data signals from said terminal via said access node (14) by said mobile phone (1) and transferring said VolP data signals into speech and control signals by said mobile phone, and
- closing said IP connection.

2. The method according to claim 1,
**characterised in that** said terminal transfers said VolP data signals into analogue or digital telephone signals and transmits said telephone signals to a telephone (3).

3. The method according to claim 1,
**characterised in that** said software is downloaded by the mobile phone from a service provider (20), preferably in a prepaid manner, comprising the steps of
- transferring information to said service provider, including software access permission data and
- providing said software by said service provider.

4. The method according to claim 3,
**characterised in that** said downloading is comprising the step of entering service access data or that said downloaded software is asking for service access data while being activated by said mobile phone.

5. Mobile phone for carrying out the steps of the method according to claim 1, comprising
- software activation means, being designed to activate software for conversion of speech and control signals into VolP data signals or vice versa,
- IP connection means, being designed to set up and close an IP connection between said mobile phone and a terminal, designed to process VolP data signals, via nodes of the internet,
- data transfer means, being designed to transfer speech and control signals into VolP data signals and to transmit said VolP data signals from said mobile phone to an access node of said nodes and/or to receive VolP data signals from said terminal via said access node and to transfer said VolP data signals into speech and control signals.

6. Mobile phone according to claim 5,
**characterised in that** the mobile phone is being designed to process Java and/or Jamba code sections and/or is being designed to communicate using a Bluetooth and/or a WLAN protocol.

7. Mobile phone comprising a microcomputer loaded with a computer program with software code sections by which the steps of the method according to claim 1 are carried out.

8. Access node comprising data transmission means, being designed to transmit VolP data signals to a mobile phone according to claim 5 and/or to receive VolP data signals from a mobile phone according to claim 5.

9. Access node according to claim 8,
**characterised in that** said access node is comprising a Bluetooth access point and/or a LAN, preferably a WLAN access point.

10. Service centre comprising software providing means, being designed to provide software comprising code sections for carrying out the method according to claim 1 to a mobile phone according to claim 5.
